# EUROPEAN PATENT SPECIFICATION

(11) **EP 1 898 174 B1**
(45) Date of publication and mention of the grant of the patent: **01.06.2011**
(21) Application number: 06120439.2
(22) Date of filing: 11.09.2006
(51) Int. Cl.: F41H 5/007, F41H 5/04, B23K 20/08

(54) **Reactive ballistic protection plate**
Reaktive ballistische Panzerungsplatte
Plaque réactive de protection ballistique

(43) Date of publication of application: 12.03.2008
(73) Proprietor: SAAB AB, 581 88 Linköping (SE)
(72) Inventor: Samuelsson, Magnus, 633 49, Eskilstuna (SE); Regebro, Christer, 633 41, Eskilstuna (SE); Persson, Håkan, 614 33, Söderköping (SE)
(74) Representative: Norberg, Charlotte

(56) References cited:
- WO-A-2004/055467
- WO-A2-02/075236
- DE-A1- 4 344 711

## Description

### Field of the invention

The invention relates to a protection plate. Specifically, the invention relates to a protection plate that can stop a ballistic projectile and a method for making such a plate.

### Background of the invention

In the area of ballistic protection there are several ways of stopping a kinetic projectile. A way of stopping a projectile is to crush the projectile by an extremely hard material, such as a ceramic. A conventional lead core projectile is crushed by means of a hard steel plate. This is a good protection against small bore projectiles, such as ball ammunition. However, to crush a projectile with a hard steel or tungsten core requires ceramic material that today is still tested in laboratories.

Another way of stopping/disrupting projectiles is to catch the projectile using soft material, such as woven material or the like. This, however, requires that the material is able to move a considerable distance and can withstand the strains from the projectile. This material must be light, ductile and strong, such as nylon, aramide, polythene, synthetic spider web or the like. This method of stopping projectiles has a relative good degree of protection against large slow projectiles such as pistol ammunition, whereas very small and fast projectile are hard to catch with woven material, wherein the affecting area is small with high surface pressure and the fact that small projectile tends to slip through the fibre threads of a woven fabric. The high velocity also renders in that the material has less time to react when impact occurs.

These two different methods are often combined rendering in a material with a hard front layer which deforms and fragments the projectile but is not able to stop the projectile; and a soft layer behind the hard layer that catches the deformed and enlarged projectile and its fragments. An example of such a protection plate is a plate consisting of ceramic and aramide and works well against smaller projectiles. For more powerful threats a plate that comprises a sheet metal with a hard surface in front of a tenacious layer give the same result. Layered plates that have been joined by rolling, gluing etc provides the possibility to obtain optimal hardness and maximal ductility.

An alternate method of stopping threats is protection plates using reactive protection. In these types of protection plates an energetic material is provided between two layers that do not need to be hard. When the projectile impacts the front layer the energetic material is initiated and burst/bulge out the plates. The projectile is then exposed to forces that heavily disrupts and deforms the projectile. However, a soft and ductile base plate provided behind is required in order to catch the fragment as stated above.

In order to obtain optimal energy absorption when a projectile impact against a ballistic protection plate is it advantageous to have the breaking procedure to occur in several layers, especially if the breaking distribution is favoured in the layer perpendicular to the substantial direction of penetration. The condition for such a characteristic exists if a material is composed of two or more structures, wherein one is a softer structure and the other/s is/are of harder structure.

A comprehensive requirement for this type of application is a low weight in relation to its protection ability and is often expressed in surface weight (kg/m²) for a certain threat. Numerous examples of layered ballistic protection plates have been disclosed.

Document US 6203908 B1 relates to such a protection plate, wherein the plate comprises a layer of ceramic bodies between steel plates.

Document US 5213905 A relates to a method of carrying out a plating of a stainless steel sheet. The plating may be carried out by explosion plating followed by after-treatment.

Document GB 2233259 A relates to a plate and a process of manufacturing such a plate. The plate comprises a hard outer layer of steel and a softer inner layer of steel. The outer layer has very great hardness while the inner layer has a very great ductility.

Document US 4645720 A relates to a plate consisting of multiple layers wherein one layer is clad to the other by explosive cladding. The inner layer of the plate has a greater hardness than the outer layers.

Document US 6360936 B1 also discloses a plate wherein layers are bonded to each other by explosive cladding followed by after-heating. The outer layer of the plate is harder than the inner plate.

Document WO 02/075236 A2 discloses an armor with repeat hit and high energy absorption capabilities. The armor comprises a metallic material that absorbs energy from a projectile impacting the armor inserted between the two armor plates.

These constructions will be very heavy in order to obtain sufficient level of protection to automatic carbines fired at a short distance.

The main objective of the invention is therefore to provide a protection plate with a low surface weight that is able to stop a ballistic projectile from a hand gun or splinter from a high explosive shell. The protection must be of light weight for the purpose of dismounted battle but also in other applications such as airborne combats and the like.

### Summary of the invention

As stated above, the use of explosive welding to manufacture layered protections plates is known. These known plates are after-processed in order to eliminate strains and tensions caused by the explosive welding. In the present invention none of the above stated mechanisms are used wherein the present invention a combined effect of the different mechanisms is obtained. It is not required that the first layer is hard in order to deform and fragment the projectile and no second ductile layer that catches the fragments. The inventors of the present invention have realised that by omitting the after-treatment and keeping the strains and tensions of the explosive welding the protection plate will get better ballistic characteristics, i.e. a better protection plate than known plates would be to use built-in energy in the protection material to neutralise the energy of impact of the projectile. By keeping the energy tensions in the material, this energy will be released when a projectile or the like impacts the material. When the projectile impacts against the protection plate the unreleased energy of the tensions is released toward the projectile neutralising the projectile. The result of this more effective ballistic protection is that the protection plate according to the invention discloses a thinner plate weighing less than a known protection plate with the same degree of protection or a protection plate with same thickness and weight as a known protection plate but with an enhanced degree of protection due to the unreleased energy tensions.

In order to reduce the weight of a protection plate, both relating to body armour as well as vehicular armour, wherein the weight is essential a protection plate according the present invention is provided, as claimed in claim 1. The invention also discloses a method according to claim 9 in order to manufacture such a plate and the use of such a plate according to claim 14.

The invention discloses a reactive ballistic protection plate for disrupting a projectile comprising an outer layer of material and an inner layer of material, wherein the layers are bonded together by an explosive welding joint wherein the reactive ballistic protection plate comprises built-in unreleased high energy tensions obtained from explosion welding and wherein the tensions are unreleased and kept in the joint by omitting after-processing to eliminate the tensions after the explosive welding.

An embodiment of the invention discloses a protection plate, wherein the layers have at least one different characteristic.

Furthermore, an embodiment of the invention discloses a protection plate wherein the outer layer is differently hardened than the inner layer.

In one embodiment of the invention the surface of the inner layer of the protection plate are differently shaped than the outer layer.

The inner layer may have a different form than the outer layer.

Additionally, an embodiment of the invention discloses a protection plate, wherein at least one layer is an alloy, such as titanium alloy, steel, aluminium alloy or the like. Outer and inner plate can be of different alloys.

An embodiment of the invention discloses a protection plate wherein the layers can withhold a large amount of high energy tensions.

The present invention, as stated above, discloses a method for manufacturing a reactive ballistic protection plate for disrupting a projectile comprising an outer layer of material and an inner layer of material, by the following step; welding the layers together by explosive welding, wherein high energy tensions are created from the explosive welding and these tensions are unreleased and kept in the reactive ballistic protection plate, wherein no after-process is performed to eliminate tensions formed by the explosive welding and wherein the layers have at least one different characteristic.

In addition the present invention discloses a method, wherein the welding step further comprises the step of; placing the outer layer on the inner layer; placing a layer of explosives on the outer layer and igniting the explosive layer.

Further, the invention discloses when placing the outer layer on the inner layer the surfaces of the different layers facing one another have different irregularities as well as differently formed.

Finally, the present invention discloses the use of a protection plate as a ballistic protection plate that is arranged to cause a disruption of an incoming penetrating projectile.
The present invention discloses the use of materials with an optimal strength characteristics and thickness for maximising tension forces and reaction time for defeating a required threat projectile.

### Brief description of the drawings

The invention will be described in more detail below with reference to examples of embodiments and with reference to the attached drawings, of which
FIG. 1 shows a protection plate according to an embodiment of the invention;
FIG. 2 shows an impact of a projectile on a protection plate;
FIG. 3 shows a deformed projectile exposed to an energy wave from the plate;
FIG. 4 shows a joint formed by explosive welding; and
FIG. 5 shows a schematic flow chart of the manufacturing of a protection plate according to the invention.

### Detailed description

The invention relates to a reactive ballistic protection plate wherein built-in energy is configured to counteract the energy of the impact of a projectile. According to the present invention the ballistic protection plate is provided that is arranged to obliterate an incoming penetrating projectile. In an embodiment of the invention a protection plate is obtained by joining two plates with different characteristics by explosive welding. This metalworking technique uses controlled detonations to force dissimilar metals into a high-quality, metallurgically bonded joint. The transition joint has high mechanical strength, is ultra-high vacuum tight and can withstand drastic thermal excursions. Due to the explosive welding large inner tensions is obtained in the transition joint of the protection plate. These large tensions, high energy, will be released when the projectile impacts against the protection plate. The released energy will in part be directed back to the projectile in the form of a pressure wave. Together with the forces from the impact and the initiated penetration of the plate it will shatter the projectile itself or the core material to very small fragments.

As mentioned, explosive welding or explosive bonding is a technique to bond metallic material together by detonations. Alloys, metals and other materials that can not be welded together may be bonded together by explosive welding, a technique that is provided by e.g. Nitro Metall AB. New compound materials are produced in the matter of a few micro seconds during a pressure corresponding to 100.000-600.000 psi. The principle of explosive welding is to place two plates together with a number of periodically spaced spacers, e.g. metal threads, placed in between the plates. Explosives are placed on one of the plates that are ignited at one end of the plate. A detonation wave is rapidly distributed along the length of the plate and causes a collision between the two plates that spreads gradually from one end to the other end. The operation forms a wave formed joint between the plates that is extremely strong. The characteristic of the joint is inter-atomic and the shearing strength of the joint is larger than the shearing strength of the plate with the lowest shearing strength. The effect of the technique is that energy in the form of large tensions/strains are built into the protection plate, especially in the welding joint; a plate that is provided with a welding joint over an entire surface. In state of the art application, these inner strains and tensions are eliminated by after-heating or reheating. However, in the protection plate according to the present invention these tensions are wanted and therefore unreleased. That is, no after-heating is performed after explosive welding.

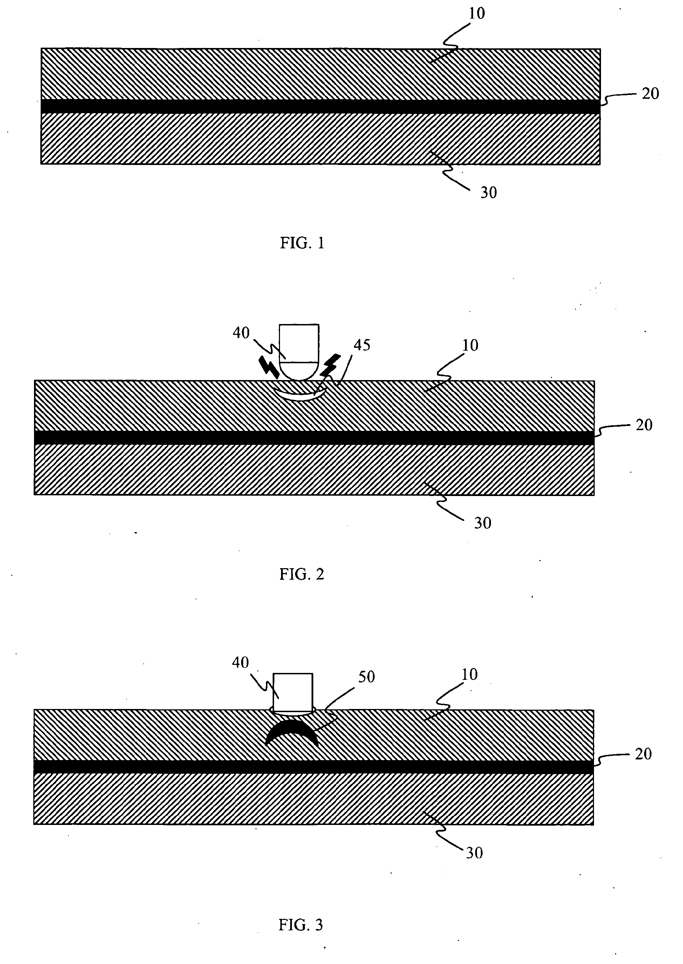

Referring to FIG. 1, the present invention relates to a protection plate 1 that comprises an outer plate 10 and an inner plate 30 that are bonded together by explosive welding. The explosive welding results in a wave formed joint 20. The plates 10, 30 may have different characteristics, such as ductility, hardness or the like. In an embodiment of the invention the outer plate 10 is a plate of titanium alloy, such as TimeTal 550, Titanium 6-4 or the like, and the inner plate is also a titanium alloy, such as TimeTal 550, Titanium 6-4 or the like, wherein the outer plate has a greater hardness than the inner plate. The plates are bonded together by explosive welding without after-heating the protection plate. By omitting the after-heating step the tensions of high energy obtained in the material is kept. It should here be understood that the material of the different plates may vary by using materials known in the art of protection plates. The hardness and ductility of the material of the layers are not as essential as the ability of the layers to maintain energy tensions and strains. The main feature of the invention is to keep the energy tensions in the plate and thereby providing a protection plate much more effective to fragment projectiles.

Referring to FIG. 2, when the projectile 40 impacts the first layer 10 a wave of energy 45 is transferred to the first layer 10. The shock wave of energy 45 travels toward the joint 20 of the layers and releases the tensions and strains containing energy within an area that is proportional to the impact energy of the projectile. This released energy travels both towards the projectile 40, disrupting the projectile 40, and towards the joint 20 and into the second layer 30. Referring to FIG. 3, the projectile 40 that is already under extreme stress from the first layer is then hit by a new shock wave 50 of energy from the joint and the combined effect of these strains and forces results in that the projectile is totally pulverised (not shown). The impression in the front layer is minimal, such as a couple of tenths of a mm which approximately corresponds to the travel time for a shock wave to go back and forth in the first layer.

The second layer is expelled backwards as a result of the projectiles originally generated shock wave 45 and the shock wave (not shown) from the released energy in the joint. This implies that the second layer bulges out on an area that is approximately proportional to the impact energy of the projectile or is totally parted from the first layer if the area of the protection plate is small. In the latter case the velocity of the second layer is low, that is, the mass of the plate is large relative the mass of the projectile, and the area is large. The second layer is easily caught by a layer of aramide or a sheet metal provided behind the protection plate.

It should here be noted that the second layer in the present invention is not used to catch the fragments of the projectile but instead is a reaction mass to balance the other forces. However, if the projectile is more powerful than what the protection plate can handle the second layer will act to stop penetrating parts.

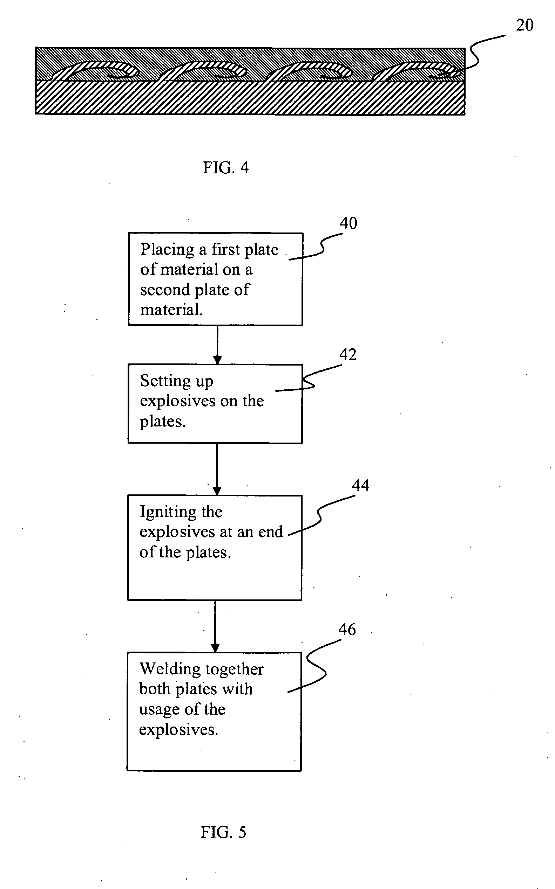

Referring to FIG. 4, the joint 20 is shown. The joint is a typical example of an explosive welding joint, wherein the joint has a wavy form. The tensions in the joint 20 caused by the explosive welding contain a large amount of energy. Typically, these tensions are not wanted in a material; however, in the process of making a reactive ballistic protection plate according to the invention, these tensions are essential and wanted because the energy of the tensions is directed toward the projectile, i.e. the energy of the tensions is directed toward the impact of the projectile, thereby fragmenting the incoming projectile. It should here be noted that the amount of energy tensions will increase if the first and second layer is of material that is differently heat treated and the amount of tensions and strains will increase if the layers have uneven surfaces/ different shaped surfaces that causes extra favourable conditions to generated energy tensions. The amount of high energy tension will also increase if the layers are of different materials. The material of the plates should be able to withhold the amount of energy caused by the explosive welding, such material that can withhold energy may be alloys of titanium, steel or aluminium. The materials that are well suited to use should have a high strength against plastic deformation, be tenacious and withhold tensions over a long time.

It should here be understood that the layers of the protection plate should be so thick that enough energy can be bound in the layer to stop an appropriate threat. Hence, the dimensioning of the plates is based on the threat/projectile the plate shall disrupt. The thickness of the plates may vary from a couple of mm to a couple of cm.

The reactive ballistic plate is manufactured in accordance with the schematic flow chart in FIG. 5. In step 40 a first and a second plate, made of materials with different properties, is registered against each other, spaced apart by a distance element, such as metal wire or the like. The materials of the plates may be of equivalent ductility or hardness. However, in one embodiment of the invention the first plate, intended to be the plate facing the surroundings when worn or mounted, is of a material with less ductility and greater hardness than the second plate. The material of the plates may be as stated above of known art such as alloy of metals or the like. In step 42 explosives are deployed along the plates. Typically a layer of explosive material is spread over the first plate. The explosives used may be; RDX, Cyclotrimethylene trinitramine; PETN, Pentaerythritol tetranitrate; TNT, Trinitrotoluene; Tetryl, Trinitrophenylmethylinitramine; Lead azide; Detasheet Ammonium nitrate; or the like. In step 44 the layer of explosive material is ignited in one end of the plate and the explosive welding moves with a very high velocity along the plate, thereby welding the first and second plate together, step 46. An explosive force of the explosive layer brings the two surfaces of the plates together progressively at a collision front. The pressure at the collision front must exceed the yield strength of the materials, so that plastic deformation will occur. A jet of metal is formed just ahead of the collision front, comprising of the two materials of the plates. The surfaces and any surface contaminants are removed in the jet. Behind the collision front, the now clean surfaces bond, under extreme pressure, in the solid state. The ballistic plate in then cut into appropriate shapes and forms without after-processing the plate such as after-heating, rolling or the like to eliminate the tensions that the explosive welding has produced. It is these high energy tensions that are essential when disrupting and breaking down the incoming projectile.

It should here be noted that the final plate differ from previously known protection plates in the matter of thickness since the first and second plate is much thinner than regularly used plates with the same degree of protection. The final plate discloses a much higher degree of protection than known protection plates. The manufacturing of the plate according to the invention differs in the manner of omitting the after-heating to preserve the high energy in the joint and the plate.

The foregoing has described the principles and preferred embodiments of the present invention. However, the invention should be regarded as illustrative rather than restrictive, and not as being limited to the particular embodiments discussed above. It should therefore be appreciated that variations may be made in those embodiments by those skilled in the art without departing from the scope of the present invention as defined by the following claims.

## Claims

1. A reactive ballistic protection plate (1) for disrupting a projectile, comprising an outer layer of material (10) and an inner layer of material (30), wherein the layers (10,30) are bonded together by an explosive welding joint (20), **characterised in that** the reactive ballistic protection plate comprises built-in unreleased high energy tensions obtained from explosive welding, and wherein the tensions are unreleased and kept in the protection plate by omitting after-processing to eliminate the tensions after the explosive welding.

2. The protection plate (1) according to claim 1, wherein the layers (10,30) have at least one different characteristic.

3. The protection plate (1) according to claim 1-2, wherein the outer layer (10) is of a material differently hardened than the material of the inner layer (30).

4. The protection plate (1) according to claims 1-3, wherein the inner layer (30) has a different form than the outer layer (10).

5. The protection plate (1) according to any of claims 1-4, wherein at least one layer (10) is a metal alloy.

6. The protection plate (1) according to any of claims 1-5, wherein the layers (10,30) can withhold a large amount of high energy tensions, such as layers with high strength against plastic deformation.

7. The protection plate (1) according to any of claims 1-6, wherein the outer plate (10) is a plate of titanium alloy such as Titanium 6-4, and the inner plate is also a titanium alloy plate such as Titanium 6-4, wherein the outer plate has a greater hardness than the inner plate and wherein the omitted after-processing is after-heating.

8. The protection plate (1) according to any of claims 1-7, wherein the plate further comprises a third layer arranged against a surface of the second layer, said surface facing away from the first layer.

9. A method for manufacturing a reactive ballistic protection plate for disrupting a projectile comprising an outer layer of material (10) and an inner layer of material (30), by the following step:
- welding the layers (10,30) together by using explosive welding, wherein high energy tensions are created from the explosive welding and these tensions are unreleased and kept in the reactive ballistic plate; and
wherein no after-process is performed to eliminate tensions formed by the explosive welding.

10. The method according to claim 9, wherein the welding step further comprises the step of:
- placing the outer layer (10) on the inner layer (30);
- placing a layer of explosives on the outer layer (10); and
- igniting the explosive layer.

11. The method according to any of claims 9-10, wherein the layers (10,30) have at least one different characteristic.

12. The method according to any of claim 9-11, wherein surfaces of the different layers facing one another have different irregularities as well as differently formed.

13. The method according to any of claim 9-12, wherein the outer layer is made of titanium alloy such as Titanium 6-4, and the inner layer is also made of titanium alloy such as Titanium 6-4, wherein the outer layer has a greater hardness than the inner layer and wherein the omitted after-processing is an after-heating.

14. Use of a reactive ballistic protection plate (1) according to claim 1 as a ballistic protection plate (1) that is arranged to cause a fragmentation of an incoming penetrating projectile (40).

## Patentansprüche

1. Reaktive, ballistische Schutzplatte (1) zum Stören eines Projektils, umfassend eine äußere Schicht aus Material (10) und eine innere Schicht aus Material (30), wobei die Schichten (10, 30) miteinander mittels einer Explosionsschweißverbindung (20) verbundenen sind,
**dadurch gekennzeichnet, dass** die reaktive, ballistische Schutzplatte eingebaute, ungelöste, hochenergetische Spannungen, die von dem Explosionsschweißen erhalten wurden, aufweist, und wobei die Spannungen ungelöst sind und in der Schutzplatte durch Auslassen einer Nachbearbeitung zum Entfernen von Spannungen nach dem Explosionsschweißen verbleiben.

2. Schutzplatte nach Anspruch 1, bei der die Schichten (10, 30) zumindest eine unterschiedliche Eigenschaft aufweisen.

3. Schutzplatte nach Anspruch 1-2, bei der die äußere Schicht (10) aus einem Material ist, das verglichen mit dem Material der inneren Schicht (30) unterschiedlich gehärtet wurde.

4. Schutzplatte nach Anspruch 1-3, bei der die innere Schicht (30) eine andere Form als die äußere Schicht (10) aufweist.

5. Schutzplatte nach einem der Ansprüche 1-4, bei der zumindest eine Schicht (10) eine Metalllegierung ist.

6. Schutzplatte nach einem der Ansprüche 1-5, bei der die Schichten (10, 30) einen großen Betrag hochenergetischer Spannungen aushalten können, wie beispielsweise Schichten mit hoher Festigkeit gegen plastische Deformierung.

7. Schutzplatte nach einem der Ansprüche 1-6, bei der die äußere Platte (10) eine Platte aus einer Titanlegierung, wie beispielsweise Titan 6-4, und die innere Platte auch eine Titanlegierungsplatte, wie beispielsweise Titan 6-4, ist, wobei die äußere Platte eine größere Härte aufweist als die innere Platte und wobei die ausgelassene Nachbearbeitung Nachheizen ist.

8. Schutzplatte nach einem der Ansprüche 1-7, bei der die Platte ferner eine dritte Schicht aufweist, die an einer Oberfläche der zweiten Schicht angeordnet ist, wobei die Oberfläche von der ersten Schicht weg zeigt.

9. Verfahren zur Herstellung einer reaktiven, ballistischen Schutzplatte zum Stören eines Projektils, umfassend eine äußere Materialschicht (10) und eine innere Materialschicht (30) mittels des folgenden Schritts:
- Aneinanderschweißen der Schichten (10, 30) mittels Explosionsschweißen, wobei die hochenergetischen Spannungen bei dem Explosionsschweißen erzeugt werden und diese Spannungen ungelöst sind und in der in der reaktiven, ballistischen Platte verbleiben, und
wobei keine Nachbearbeitung zum Entfernen von Spannungen, die durch das Explosionsschweißen gebildet werden, durchgeführt wird.

10. Verfahren nach Anspruch 9, bei dem der Schweißschritt ferner die Schritte umfasst:
- Anordnen der äußeren Schicht (10) an der inneren Schicht (30);
- Anordnen einer Schicht Sprengstoff an der äußeren Schicht (10); und
- Zünden der Sprengstoffschicht.

11. Verfahren nach einem der Ansprüche 9-10, bei dem die Schichten (10, 30) zumindest eine unterschiedliche Eigenschaft aufweisen.

12. Verfahren nach einem der Ansprüche 9-11, bei dem die Oberflächen der unterschiedlichen Schichten, die aufeinander zeigen, unterschiedliche Unregelmäßigkeiten aufweisen sowie unterschiedlich geformt sind.

13. Verfahren nach einem der Ansprüche 9-12, bei dem die äußere Schicht (10) aus einer Titanlegierung, wie beispielsweise Titan 6-4, hergestellt ist und die innere Schicht auch aus einer Titanlegierung, wie beispielsweise Titan 6-4, hergestellt ist, wobei die äußere Schicht eine größere Härte aufweist als die innere Schicht und wobei die ausgelassene Nachbearbeitung ein Nachheizen ist.

14. Verwendung einer reaktiven, ballistischen Schutzplatte (1) nach Anspruch 1 als eine ballistische Schutzplatte (1), die angeordnet ist, um eine Zerstückelung eines ankommenden, eindringenden Projektils (40) zu erwirken.

## Revendications

1. Plaque de protection balistique réactive (1) destinée à arrêter un projectile, comprenant une couche extérieure de matériau (10) et une couche intérieure de matériau (30), dans laquelle les couches (10, 30) sont collées ensemble par un joint de soudage par explosion (20), **caractérisée en ce que** la plaque de protection balistique réactive comprend des tensions de grande énergie non libérées intégrées obtenues à partir d'un soudage par explosion, et dans laquelle les tensions ne sont pas libérées et sont maintenues dans la plaque de protection en omettant un post-traitement destiné à éliminer les tensions après le soudage par explosion.

2. Plaque de protection (1) selon la revendication 1, dans laquelle les couches (10, 30) présentent au moins une caractéristique différente.

3. Plaque de protection (1) selon la revendication 1 ou la revendication 2, dans laquelle la couche extérieure (10) est réalisée dans un matériau durci de manière différente du matériau de la couche intérieure (30).

4. Plaque de protection (1) selon l'une quelconque des revendications 1 à 3, dans laquelle la couche intérieure (30) présente une forme différente de celle de la couche extérieure (10).

5. Plaque de protection (1) selon l'une quelconque des revendications 1 à 4, dans laquelle au moins une couche (10) est réalisée dans un alliage métallique.

6. Plaque de protection (1) selon l'une quelconque des revendications 1 à 5, dans laquelle les couches (10, 30) peuvent retenir un grand nombre de tensions de grande énergie, telles que des couches qui présentent une grande résistance vis-à-vis d'une déformation plastique.

7. Plaque de protection (1) selon l'une quelconque des revendications 1 à 6, dans laquelle la plaque extérieure (10) est une plaque en alliage de titane tel que du titane 6 - 4, et la plaque intérieure est également une plaque en alliage de titane tel que du titane 6 - 4, dans laquelle la plaque extérieure présente une plus grande dureté que la plaque intérieure et dans laquelle le post-traitement omis est un post-échauffement.

8. Plaque de protection (1) selon l'une quelconque des revendications 1 à 7, dans laquelle la plaque comprend en outre une troisième couche disposée contre une surface de la deuxième couche, ladite surface faisant face en s'éloignant de la première couche.

9. Procédé de fabrication d'une plaque de protection balistique réactive destinée à arrêter un projectile, comprenant une couche extérieure de matériau (10) et une couche intérieure de matériau (30), comprenant l'étape suivante consistant à :
- souder les couches (10, 30) ensemble en utilisant un soudage par explosion,
dans lequel des tensions de grande énergie sont créées à partir du soudage par explosion et ces tensions ne sont pas libérées et sont maintenues dans la plaque balistique réactive ; et
dans lequel aucun post-traitement n'est effectué de façon à éliminer les tensions formées par le soudage par explosion.

10. Procédé selon la revendication 9, dans lequel l'étape de soudage comprend en outre les étapes consistant à :
- placer la couche extérieure (10) sur la couche intérieure (30) ;
- placer une couche d'explosifs sur la couche extérieure (10) ; et
- allumer la couche explosive.

11. Procédé selon l'une quelconque des revendications 9 à 10, dans laquelle les couches (10, 30) présentent au moins une caractéristique différente.

12. Procédé selon l'une quelconque des revendications 9 à 11, dans lequel les surfaces des différentes couches qui se font face les unes les autres présentent des irrégularités différentes et sont formés de manière différente.

13. Procédé selon l'une quelconque des revendications 9 à 12, dans lequel la couche extérieure est réalisée dans un alliage de titane tel que du titane 6 - 4, et la couche intérieure est également réalisée dans un alliage de titane tel que du titane 6 - 4, dans lequel la couche extérieure présente une plus grande dureté que la couche intérieure et dans lequel le post-traitement omis est un post-échauffement.

14. Utilisation d'une plaque de protection balistique réactive (1) selon la revendication 1, en tant que plaque de protection balistique (1) qui est agencée de façon à provoquer une fragmentation d'un projectile pénétrant entrant (40).
